(19) Europäisches Patentamt
European Patent Office
Office européen des brevets

(11) Veröffentlichungsnummer: **0 055 221**
**A2**

(12) **EUROPÄISCHE PATENTANMELDUNG**

(21) Anmeldenummer: **81810508.2**

(22) Anmeldetag: **21.12.81**

(51) Int. Cl.³: **C 09 B 44/04**, C 09 B 69/06, D 01 F 1/06

(30) Priorität: **24.12.80 CH 9572/80**

(43) Veröffentlichungstag der Anmeldung: **30.06.82 Patentblatt 82/26**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Loew, Peter, Dr., Concordiastrasse 23, CH-4142 Münchenstein (CH)**

(54) **Monokationische Farbsalze.**

(57) Farbsalze der Formel

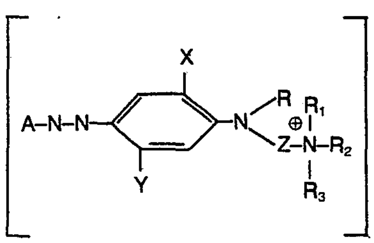

$BF_4^{\ominus}$ (I)

worin A den Rest einer carbocyclischen oder heterocyclischen aromatischen Diazokomponente, R H, gegebenenfalls substituiertes Alkyl, Alkenyl, Cycloalkyl, Phenalkyl oder Phenyl, Z gegebenenfalls substituiertes Alkylen, $R_1$ und $R_2$ Alkyl, $R_3$ Alkyl, Cycloalkyl, Hydroxyalkyl oder Aralkyl oder worin $R_1$, $R_2$ und $R_3$ zusammen mit dem dazwischen liegenden N-Atom einen heterocyclischen Ring bilden, X H, Halogen, Alkoxyl, Alkyl, Y H, Halogen, Alkyl, Alkoxy oder Alkanoylamino bedeuten, wobei, sofern A für den Rest einer heterocyclischen Diazokomponente steht, $R_1$, $R_2$ und $R_3$ zusammen mit dem dazwischen liegenden N-Atom einen heterocyclischen Ring bilden. Die Farbsalze eignen sich vorzüglich für die Spinnfärbung von Polyacrylnitril. Man erhält rot gefärbte transparente Fasern mit ausgezeichneter Echtheit.

EP 0 055 221 A2

3-13225/=

Monokationische Farbsalze

Die GB-PS 1,174,103 beschreibt Salze kationischer Azofarbstoffe der Benzol-azo-dialkylanilinreihe enthaltend an einer Alkylgruppe einen Pyridiniumrest. Als Anionen sind Chlor, Brom, Jod, Methylsulfat oder Sulfonate genannt. Diese wasserlöslichen Salze eignen sich zwar gut zum Färben von Polyacrylnitrilfasern aus wässrigem Bade, deren Verwendung für die Spinnfärbung von Polyacrylnitril ist, jedoch mit erheblichen Nachteilen verbunden.

Es wurde nun gefunden, dass sich Tetrafluorboratsalze monokationischer Azofarbstoffe der Formel

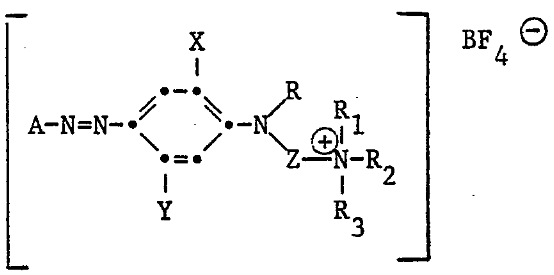

(I)

worin A den Rest einer carbocyclischen oder heterocyclischen aromatischen Diazokomponente, R H, gegebenenfalls substituiertes Alkyl, Alkenyl, Cycloalkyl, Phenalkyl oder Phenyl, Z gegebenenfalls substituiertes Alkylen, $R_1$ und $R_2$ Alkyl, $R_3$ Alkyl, Hydroxyalkyl, Cycloalkyl oder Aralkyl, oder worin $R_1$, $R_2$ und $R_3$ zusammen mit dem dazwischen liegenden N-Atom einen heterocyclischen Ring bilden, X H, Halogen, Alkoxy, Alkyl, Y H, Halogen, Alkyl, Alkoxy oder Alkanoylamino bedeuten, wobei, sofern A für den Rest einen heterocyclischen Diazokomponente steht, $R_1$, $R_2$ und $R_3$ zusammen mit dem dazwischen liegenden N-Atom einen heterocyclischen Ring bilden, hervorragend für die Spinnfärbung von Polyacrylnitril eignen.

Bedeutet in Formel (I) A einen carbocyclischen Rest, dann beispielsweise einen Naphtalin oder insbesondere einen gegebenenfalls substituierten Phenylrest. Als Substituenten seien genannt: Halogen, insbesondere Chlor oder Brom, $C_1$-$C_2$-Alkyl oder -Alkoxy, Nitro, Cyan, Trifluormethyl, $C_1$-$C_2$-Alkylsulfonyl, $C_2$-$C_6$-Alkoxycarbonyl oder Phenylazo.

A bedeutet vorzugsweise einen Rest der Formel

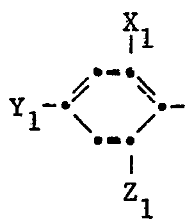

worin $X_1$ und $Z_1$ H, Halogen, Methyl, $C_1$-$C_4$-Alkoxy, Nitro, Trifluormethyl, Cyan oder $C_2$-$C_6$-Alkoxycarbonyl, $Y_1$ H, Halogen, Cyan, $C_1$-$C_4$-Alkylsulfonyl, $C_2$-$C_6$-Alkoxycarbonyl, Phenylazo oder insbesondere Nitro bedeuten.

Als heterocyclische Reste A seien vorzugsweise Thiadiazolreste und insbesondere solche der Formeln

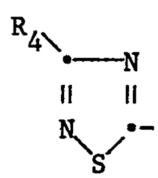

oder

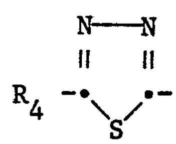

genannt, worin $R_4$ H, $C_1$-$C_4$-Alkyl oder gegebenenfalls durch Methyl, Nitro- oder $C_1$-$C_2$-Alkoxy substituiertes Phenyl bedeuten.

R steht in Formel I vorzugsweise für $C_1$-$C_4$-Alkyl, das beispielsweise durch Hydroxy, $C_1$-$C_2$-Alkoxy, $C_2$-$C_4$-Alkanoyloxy, Phenoxy oder Cyan substituiert sein kann. Bedeutet R Cycloalkyl, dann bevorzugt Cyclohexyl. Steht R für Phenalkyl, dann vorzugsweise für Benzyl oder Phenyläthyl. Schliesslich kann R auch gegebenenfalls, beispielsweise durch Halogen, Methyl oder $C_1$-$C_2$-Alkoxy substituiertes Phenyl sein.

X steht vorzugsweise für Chlor, Methyl oder $C_1$-$C_2$-Alkoxy, insbesondere H und Y ist bevorzugt Methyl, $C_1$-$C_2$-Alkoxy oder $C_2$-$C_4$-Alkanoylamino, insbesondere H.

Z steht vorzugsweise für $C_1$-$C_4$-Alkylen, das beispielsweise durch Hydroxy oder $C_1$-$C_2$-Alkoxy substituiert sein kann.

$R_1$, $R_2$ und $R_3$ stellen vorzugsweise Methyl- oder Aethylgruppen dar oder $R_1$, $R_2$ und $R_3$ bilden zusammen mit dem dazwischenliegenden N-Atom einen gegebenenfalls durch Methyl und/oder Aethylgruppen substituierten Pyridinring.

Die neuen Farbsalze erhält man zweckmässig durch Umsetzen der wässrigen Lösung eines Farbsalzes der Formel

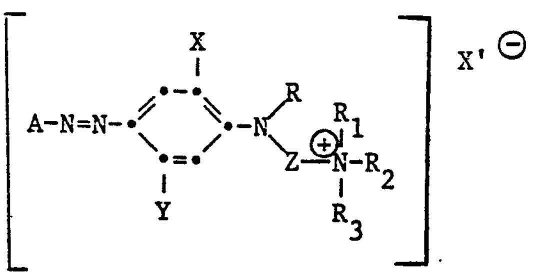

(II)

worin $X'^{\ominus}$ ein wasserlöslich machendes Anion bedeutet, mit Natriumtetrafluoroborat. Als wasserlöslich machende Anionen dienen vorzugsweise die Chloride, Bromide, Sulfate, Methylsulfate, Alkylsulfate oder Acetate. Dank ihrer Schwerlöslichkeit fallen die Tetrafluorborate aus.

Die Ausgangssalze stellen grösstenteils bekannte Verbindungen dar, die beispielsweise in der GB-PS 1.174.193 beschrieben sind und nach dem in der GB-PS 1.047.293 beschriebenen Verfahren durch Kuppeln der Diazoverbindung eines carbocyclischen oder heterocyclischen aromatischen Amins mit einem Amin der Formel

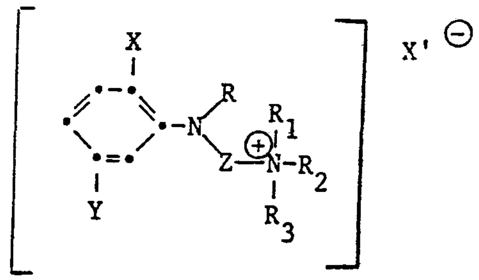

erhalten werden.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 40 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein ökonomisches Färben erlaubt.

Ausser den Polymeren des Acrylnitrils kommen als zu verspinnendes Substrat Mischpolymerisate des Acrylnitrils mit anderen Vinyl-Verbindungen, wie beispielsweise mit Vinylchlorid, Vinylfluorid, Vinylidenchlorid, Vinylacetat oder -propionat, Vinylpyridin, Vinylimidazol, Vinylpyrrolidon, Vinylalkohol, Acryl- oder Methacrylsäureestern oder Acrylamiden in Betracht, wobei diese Mischpolymerisate mindestens 70 Gew.% an Acrylnitril aufweisen müssen und weiterhin saure Gruppen enthalten, die als Endgruppen in das Polymere mittels eines Katalysators eingeführt oder mittels solche saure Gruppen enthaltenden Comonomeren einpolymerisiert oder aufgepfropft wurden.

Nach dem erfindungsgemässen Verfahren erhält man völlig transparente, stippenfreie Spinnlösungen, die keine Verstopfung oder mechanische Abnutzung der Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss verwendeten Farbstoffe gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermofixierechtheit, Dämpf- und Wasch- und Lichtechtheit der so gefärbten Fasern hervorzuheben.

Da sich die erfindungsgemäss verwendeten Tetrafluorborat-Farbstoffsalze aus den wässrigen Lösungen, wie sie bei der Farbstoffsynthese entstehen, sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüssigkeit verwendeten aprotischen Lösungsmitteln vor dem Verspinnen nicht erst abgetrennt werden müssen, so dass insbesondere zusätzliche verfahrenstechnische Massnahmen vermieden werden. Die überraschend geringe Wasserlöslichkeit der erfindungsgemässen Farbsalze ist ein weiterer Vorteil im Hinblick auf das Ausbluten des Farbsalzes im wässrigen Fällbad.

Beispiel 1: 714 g einer wässrigen Essigsäurelösung enthaltend ca. 290 g des Farbstoffes der Formel

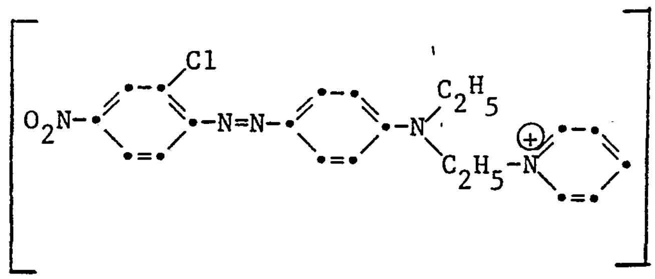

$X^{\ominus}$

worin $X^{\ominus}$ das Acetatanion darstellt, werden mit 700 ml Wasser verdünnt und zu einer Lösung von 100 g $NaBF_4$ in 900 ml Wasser getropft. Das sofort ausgefallene Salz ($X = BF_4$) wird abfiltriert mit Wasser gewaschen und zur Entfernung anorganischer Salze in 1000 ml Wasser angeschlämmt und erneut filtriert. Nach dem Trocknen werden 304 g eines braunen Pulvers erhalten, welches sich zu über 20 Gew.% in DMF löst, aber zu weniger als 0,2% in Wasser.

Beispiele 2-15: In der nachfolgenden Tabelle sind weitere Farbsalze aufgeführt, die man erhält, wenn man nach den Angaben des Beispiels 1 ein Farbsalz der Formel

$$[A-N=N-B^{\oplus}]\ X^{\ominus}$$

mit Na. tetrafluorborat umsetzt, wobei A die in Kolonne 2, B die in Kolonne 3 und X die in Kolonne 4 der Tabelle angegebene Bedeutung hat. Kolonne 5 gibt die Nuance der damit erhaltenen spinngefärbten PAN-Faser an.

Tabelle

| Bsp. | A | B | X | Nuance |
|---|---|---|---|---|
| 2 | 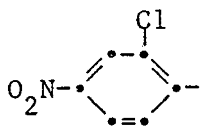 | 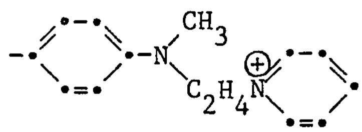 | Cl | rot |
| 3 | 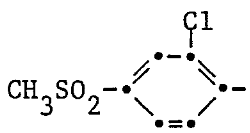 | " | Cl | orange |
| 4 | 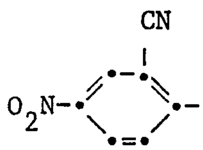 | " | Cl | bordeaux |
| 5 | 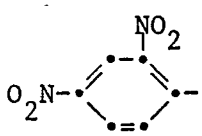 | 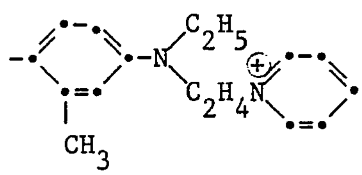 | Cl | rot |
| 6 | 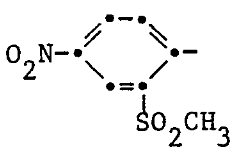 | 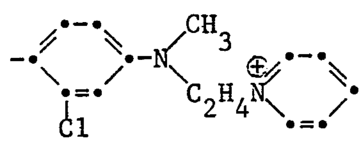 | Cl | rot |
| 7 | 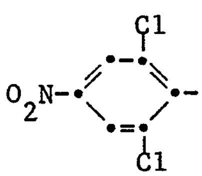 | 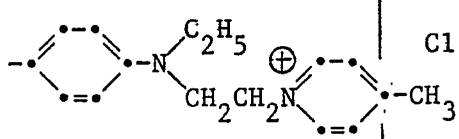 | Cl | gelbbraun |
| 8 | 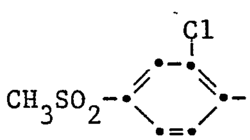 | 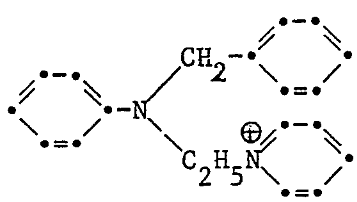 | Cl | gelb |

| Bsp. | A | B | X | Nuance |
| --- | --- | --- | --- | --- |
| 9 | 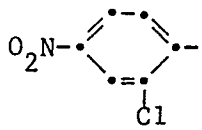 | 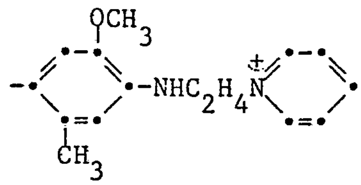 | Cl | rot |
| 10 | 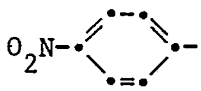 | 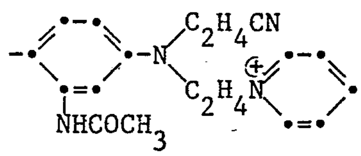 | Cl | rot |
| 11 | 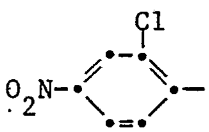 | 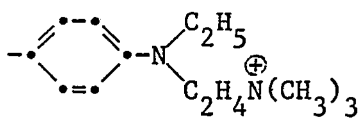 | Cl | rot |
| 12 | 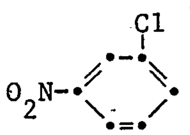 | 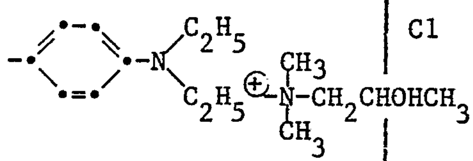 | Cl | rot |
| 13 | 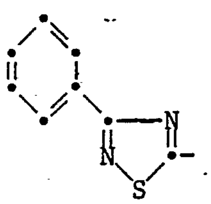 | 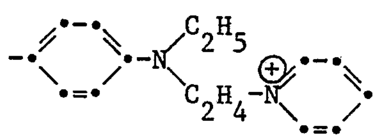 | Cl | rot |
| 14 | " | 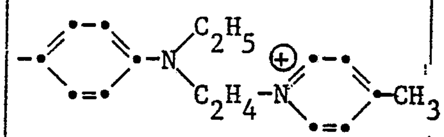 | Cl | rot |
| 15 | 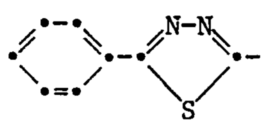 | 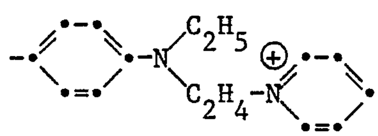 | Cl | scharlach |

Beispiel 16: Zu 100 Teilen einer 30%igen Lösung eines sauermodifizierten Polyacrylnitrils in Dimethylformamid werden 5 Teile einer 5%igen Lösung des gemäss Beispiel 1 erhaltenen Farbsalzes in Dimethylformamid gegeben. Die zu verspinnende Lösung wird homogenisiert und nach einem in der Technik üblichen und bekannten Trockenspinnverfahren versponnen.

Man erhält Fäden in einem kräftigen Rotton, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind ausserordentlich hoch.

Führt man die Faserherstellung nach einem in der Technik üblichen Nass-Spinnverfahren durch, erhält man gefärbte Fäden von gleich guten Eigenschaften. Die Fäll- und Verstreckbäder werden nur äusserst geringfügig angefärbt.

Verwendet man anstelle des obengenannten Farbstoffes die in den Beispielen 2-15 der Tabelle aufgeführten Farbstoffe, so erhält man gleichfalls kräftige Färbungen mit hohen Echtheiten.

Patentansprüche

1. Farbsalze der Formel

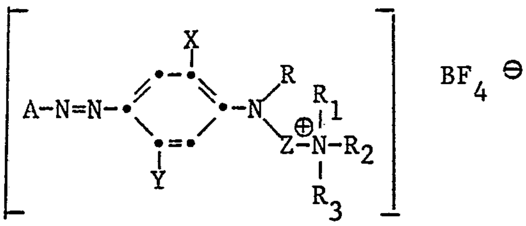

(I)

worin A den Rest einer carbocyclischen oder heterocyclischen aromatischen Diazokomponente, R H, gegebenenfalls substituiertes Alkyl, Alkenyl, Cycloalkyl, Phenalkyl oder Phenyl, Z gegebenenfalls substituiertes Alkylen, $R_1$ und $R_2$ Alkyl, $R_3$ Alkyl, Cycloalkyl, Hydroxyalkyl oder Aralkyl oder worin $R_1$, $R_2$ und $R_3$ zusammen mit dem dazwischen liegenden N-Atom einen heterocyclischen Ring bilden, X H, Halogen, Alkoxy, Alkyl, Y H, Halogen, Alkyl, Alkoxy oder Alkanoylamino bedeuten, wobei, sofern A für den Rest einer heterocyclischen Diazokomponente steht, $R_1$, $R_2$ und $R_2$ zusammen mit dem dazwischen liegenden N-Atom einen heterocyclischen Ring bilden.

2. Farbsalze gemäss Anspruch 1, worin A einen Rest der Formel

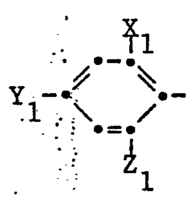

bedeutet, worin $X_1$ und $Z_1$ H, Halogen, Methyl, $C_1$-$C_4$-Alkoxy, Nitro, Trifluormethyl, Cyan oder $C_2$-$C_6$-Alkoxycarbonyl, $Y_1$ H, Halogen, Nitro, Cyan, $C_1$-$C_4$-Alkylsulfonyl, $C_2$-$C_6$-Alkoxycarbonyl oder Phenylazo bedeuten.

3. Farbsalze gemäss Anspruch 2, worin $Y_1$ die Nitrogruppe bedeutet.

4. Farbsalze gemäss Anspruch 1, worin A einen Thiadiazolrest bedeutet.

5. Farbsalze gemäss Anspruch 4, worin A einen Rest der Formel

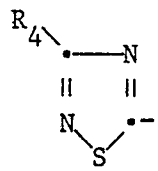

bedeutet, worin $R_4$ H, $C_1$-$C_4$-Alkyl oder gegebenenfalls durch Nitro, Methyl, $C_1$-$C_4$-Alkoxy substituiertes Phenyl bedeutet.

6. Farbsalze gemäss Anspruch 1, worin R $C_1$-$C_4$-Alkyl, Z $C_2$-$C_4$-Alkylen, $R_1$ und $R_2$ $C_1$-$C_2$-Alkyl, $R_3$ $C_1$-$C_2$-Alkyl oder Benzyl, oder $R_1$, $R_2$ und $R_3$ zusammen mit dem dazwischen liegenden N einen gegebenenfalls durch Alkylgruppen substituierten Pyridinring bilden, X H, Y H oder Methyl bedeuten.

7. Verfahren zur Herstellung von Farbsalzen gemäss Anspruch 1, dadurch gekennzeichnet, dass man die wässrige Lösung eines Farbsalzes der Formel

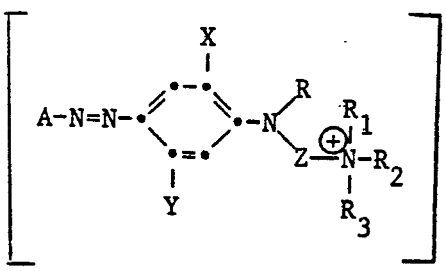 $X'^{\ominus}$ (II)

worin $X'^{\ominus}$ ein wasserlösliches Anion bedeutet, mit Natriumtetrafluorborat umsetzt.

8. Verfahren zum Spinnfärben von Polymeren des Acrylnitrils oder Mischpolymeren mit überwiegendem Acrylnitrilanteil, dadurch gekennzeichnet, dass man der Spinnlösung ein Farbsalz gemäss Anspruch 1 zusetzt.

9. Spinngefärbte Fasern von Polymeren des Acrylnitrils oder Mischpolymeren mit überwiegendem Acrylnitrilanteil, enthaltend ein Farbsalz gemäss Anspruch 1.